# EUROPÄISCHE PATENTSCHRIFT

(11) **EP 3 689 440 B1**
(45) Veröffentlichungstag und Bekanntmachung des Hinweises auf die Patenterteilung: **29.11.2023**
(21) Anmeldenummer: 19155012.8
(22) Anmeldetag: 01.02.2019
(51) Int. Cl.: B01D 53/00, B01D 53/04, B01D 53/30, B01D 53/75

(54) **VERFAHREN UND VORRICHTUNG ZUR REINIGUNG VON IM KREISLAUF GEFÜHRTEN PROZESSGASEN AUS DER THERMISCHEN BEHANDLUNG VON SCHÜTTGÜTERN**
METHOD AND DEVICE FOR THE PURIFICATION OF CIRCULATING PROCESS GASES FROM THE TREATMENT OF GRANULAR MATERIALS
PROCÉDÉ ET DISPOSITIF DE NETTOYAGE DE GAZ DE PROCESSUS MIS EN CIRCULATION PROVENANT DES TRAITEMENTS DES MATÉRIAUX GRANULÉS

(43) Veröffentlichungstag der Anmeldung: 05.08.2020
(73) Patentinhaber: Polymetrix AG, 9245 Oberbüren (CH)
(72) Erfinder: Meili, Peter, 9630 Wattwil (CH); Eusebio, Fernando, 8592 Uttwil (CH); Christel, Andreas, 9524 Zuzwil (CH)
(74) Vertreter: Hepp Wenger Ryffel AG

(56) Entgegenhaltungen:
- DE-A1- 1 667 323
- DE-A1- 2 352 204
- DE-A1- 10 246 252
- DE-A1- 19 711 681
- DE-A1- 19 943 219
- DE-A1-102004 006 861
- US-B1- 6 436 360
- US-B1- 6 652 826

## Beschreibung

Verfahren zur Reinigung von Prozessgasen aus einem thermischen Behandlungsprozess von Schüttgütern durch katalytische Verbrennung sind bekannt. Eine besondere Ausführungsform sieht die Reinigung von Prozessgasen vor, die im Wesentlichen im Kreislauf geführt werden und nach der katalytischen Verbrennung nur geringe Mengen an Restsauerstoff enthalten dürfen. Dies ist insbesondere dann notwendig, wenn das zu behandelnde Schüttgut sauerstoffempfindlich ist. Durch die Verbrennung organischer Substanzen reduziert sich der Sauerstoffgehalt im Prozessgas. Dementsprechend muss das Prozessgas eine ausreichende Sauerstoffmenge enthalten, um die Verbrennung zu gewährleisten, aber gleichzeitig im Prozessgas so gering gehalten werden, dass nach der Verbrennung keine übermässige Sauerstoffmenge im Prozessgas verbleibt. Dazu wird dem Prozessgas eine geregelte Sauerstoffmenge zugeführt, wobei die Regelung aufgrund einer Messung einer Gaskomponente erfolgt.

Üblicherweise wird dazu die Gaszusammensetzung am Eintritt oder Austritt des Katalysatorbettes gemessen und dementsprechend die Sauerstoffzufuhr für den Verbrennungsprozess geregelt.

Derartige Verbrennungssysteme bestehend aus einer Serie an Prozessapparaten, die zur Sicherstellung des Verbrennungsvorganges notwendig sind. Im Wesentlichen werden Apparate zur Erwärmung des Prozessgases, Apparate zum Vorlegen eines Katalysatorbettes und Apparate zur Kühlung des Prozessgases eingesetzt. Die einzelnen Apparate sind mittels Prozessgasleitungen miteinander verbunden.

Für die Messung und Regelung der Sauerstoffmenge kommen noch Messgasleitungen, Messkammern, Gassensoren, Einspeiseleitungen für sauerstoffhaltige Gase sowie Regelventile für die sauerstoffhaltigen Gase zum Einsatz. Zusätzlich werden Messgasleitungen und Messkammern zur Kalibrierung der Gassensoren benötigt.

Insgesamt ergibt sich eine teure und aufwendige Anlage, die bei der Installation erheblichen Kosten und Zeitaufwand verursacht. Weiter wird über die Vielzahl an Komponenten und die Rohrleitungen, welche diese Komponenten verbinden, ein hoher Energieverlust durch Wärmeabstrahlung verursacht. Um Wärmeverluste zu minimieren muss entsprechendes Isolationsmaterial angebracht werden, was wiederum mit hohen Material- und Installationskosten verbunden ist.

Der Betrieb derartiger Systeme muss dabei immer auf die am schwersten zu verbrennende organische Substanz im Gasgemisch ausgelegt werden. Die Eintrittstemperaturen ins Katalysatorbett müssen dafür derart hoch gewählt werden, dass eine nahezu vollständige Verbrennung der am schwersten zu verbrennenden organischen Substanz im Gasgemisch erfolgt. Insbesondere wenn hochsiedende organische Substanzen oder Substanzen mit hoher Verbrennungstemperatur im Gasgemisch vorhanden sind, muss eine entsprechend hohe Eintrittstemperatur ins Katalysatorbett erreicht werden, was grosse Wärmetauscher zum Aufheizen des Prozessgases bedingt und wiederum einen hohen Energieverbrauch und/oder weitere Prozessstufen zur Energierückgewinnung bedingt.

Wird die benötigte Temperatur zur vollständigen Verbrennung nicht erreicht, führt dies zur Verunreinigung und damit Deaktivierung des Katalysatormaterials. Als Folge einer Deaktivierung muss die Eintrittstemperatur ins Katalysatorbett weiter erhöht werden, was weitere energetische und apparative Nachteile mit sich bringt. Ist die Deaktivierung derart fortgeschritten, dass eine ausreichende Verbrennung nicht mehr gewährleistet ist, muss das Katalysatormaterial ausgetauscht werden, was mit hohen Material- und Arbeitskosten sowie einer Betriebsunterbrechung verbunden ist.

Gemäss der EP-0 722 766 A1 wird die Sauerstoffkonzentration am Austritt des Katalysators mit einem schnell ansprechenden Sensor gemessen. Gemäss der EP-0 699 471 A1 wird der KohlenmonoxidGehalt am Austritt des Katalysators gemessen. Gemäss der EP-1 100 611 A1 wird das Verhältnis brennbarer Substanzen zu Sauerstoff am Eintritt und Austritt des Katalysatorbettes gemessen.

Gemäss dem zuvor erwähnten Stand der Technik kommen als Katalysatoren edelmetallhaltige Katalysatoren zum Einsatz.

Gemäss der DE-10 2004 006 861 A1 können als Katalysatormaterial auch Metalloxide zum Einsatz kommen. Die Bereitstellung eines Schutzbettes mit einem festen Adsorptionsmaterial vor dem Katalysatorbehälter ist nicht beschrieben.

Gemäss der der CH-698 275 A2 erfolgt die Messung der Gaskomponente in einer separaten Messkammer, wobei auch die Vorteile langsam ansprechender Sensoren beschrieben sind.

In der US 6,436,360 B1 ein Verfahren zur Aufreinigung eines Abgases beschrieben, welches aus der Phenol-Herstellung stammt. Das hierbei auftretende wesentliche Problem ist die Deaktivierung des Katalysators durch Teerbildung. Als Lösung für dieses Problem wird vorgeschlagen, das Abgas vorgängig durch ein Schutzbett zu leiten.

Die US 6,652,826 B1 betrifft die Bearbeitung von saurem Naturgas durch Entfernung der Säurekomponenten (Schwefelwasserstoff und Kohlendioxid). Es wurde gefunden, dass anwesende Spuren schwerer Kohlenwasserstoffe (welche nicht näher spezifiziert sind) vorgängig in einem Schutzbett aus Aktivkohle entfernt werden sollen, um die Lebensdauer des Katalysators zu erhöhen.

Insgesamt sind die oben beschriebenen Systeme komplex sowie teuer in Herstellung, Installation und Betrieb. Während es Bestrebungen gibt, Betriebskosten durch reduzierte Verbrennungstemperaturen einzusparen, wird nicht darauf eingegangen, dass sich dadurch die Lebenszeit der katalytisch aktiven Materialien verringert. Als Schutzmassnahmen zur Verlängerung der Lebenszeit werden lediglich die Verwendung von Prozessstufen zur Abtrennung von Feststoffen sowie die Adsorption von Katalysatorgiften erwähnt.

Es war die Aufgabe der vorliegenden Erfindung, die Nachteile des vorliegend diskutierten Stands der Technik zu überwinden und ein verbessertes Verfahren und eine verbesserte Vorrichtung zur Reinigung von Prozessgasen bereitzustellen.

Die vorliegende Aufgabe wird erfindungsgemäss durch ein Verfahren gemäss Anspruch 1 gelöst.

Im Detail betrifft die vorliegende Erfindung ein Verfahren zur Reinigung eines Prozessgases aus einem Reaktor zur thermischen Behandlung von Polyestern wie Polyethylenterephthalat und seinen Copolymeren, das organische Verunreinigungen und optional eine Sauerstoffmenge enthält, wobei die Sauerstoffmenge geringer ist als eine Sauerstoffmenge, die zur vollständigen Verbrennung der organischen Verunreinigungen nötig ist, wobei das Verfahren die folgende Schritte umfasst:
Einleitung eines Prozessgases aus einem Reaktor zur thermischen Behandlung von Polyestern wie Polyethylenterephthalat und seinen Copolymeren, in zumindest einen Wärmetauscher zum Aufheizen des Prozessgases und Aufheizen des Prozessgases in diesem Wärmetauscher;
geregelte Zufuhr eines sauerstoffhaltigen Gases in das zu reinigende Prozessgas;
Einleitung des mit dem sauerstoffhaltigen Gas versetzten Prozessgases in einen Katalysatorbehälter mit mindestens einem darin angeordnetem Katalysatorbett, welcher vom Prozessgas von einer Eintrittsseite zu einer Austrittsseite durchströmt wird und anschliessender Verbrennung der organischen Verunreinigungen im Prozessgas in dem zumindest einem Katalysatorbett,
Zumindest teilweise Rückführung des Prozessgases in den Reaktor zur thermischen Behandlung von Polyestern wie Polyethylenterephthalat und seinen Copolymeren,
dadurch gekennzeichnet, dass das Prozessgas vor Eintritt in den Katalysatorbehälter durch ein Schutzbett mit einem festen Adsorptionsmaterial geleitet wird, das hochsiedende organische Substanzen oder organische Substanzen mit hoher Verbrennungstemperatur, aus dem Prozessgasstrom entfernt, wobei eine Temperatur im Bereich von 100 bis 250°C eingestellt wird, so dass die hochsiedenden Substanzen kondensieren und vom Adsorptionsmaterial aufgenommen werden können.

Dieses Verfahren zeichnet sich insbesondere dadurch aus, dass die Substanzen, welche die höchsten Verbrennungstemperaturen erfordern, vor der Verbrennung durch Adsorption aus dem Prozessgas entfernt werden. Daraus ergibt sich der Vorteil, dass tiefere Verbrennungstemperaturen zum Einsatz kommen können, wodurch kleinere Apparaten zum Heizen und Kühlen eingesetzt werden können und der benötigte Energieverbrauch vermindert werden kann.

Das erfindungsgemässe Verfahren wird zur Reinigung von Prozessgasen aus einer thermischen Behandlung von Polyestern wie Polyethylenterephthalat und seinen Copolymeren verwendet, wobei die Reinigung durch katalytische Verbrennung erfolgt.

Bei den Polyestern wie Polyethylenterephthalat und seinen Copolymeren handelt es sich dabei um jede Form von rieselfähigen, festen Partikeln, wie beispielsweise Körnern, Flocken, Granulaten, Pulvern oder Agglomeraten.

Polykondensate wie die erfindungsgemäss zu behandelnden Polyester werden durch eine Polykondensationsreaktion unter Abspaltung eines niedermolekularen Reaktionsproduktes gewonnen. Dabei kann die Polykondensation direkt zwischen den Monomeren erfolgen. Die Polykondensation kann auch über eine Zwischenstufe erfolgen, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im Wesentlichen ist das so gewonnene Polykondensat linear, wobei eine geringe Anzahl an Verzweigungen entstehen kann.

Polyester sind Polymere, welche üblicherweise durch Polykondensation aus einer Diol-Komponente mit der allgemeinen Struktur HO-R¹-OH und einer Dicarbonsäure-Komponente mit der allgemeinen Struktur HOOC-R²-COOH gewonnen werden, wobei R¹ und R² üblicherweise aliphatische Kohlenwasserstoffe mit 1 bis 15 Kohlenstoffatomen, aromatische Kohlenwasserstoffe mit 1 bis 3 aromatischen Ringen, zyklische Kohlenwasserstoffe mit 4 bis 10 Kohlenstoffatomen oder heterozyklische Kohlenwasserstoffe mit 1 bis 3 Sauerstoffatomen und 3 bis 10 Kohlenstoffatomen sind. Üblicherweise werden lineare oder zyklische Diol-Komponenten und aromatische oder heterozyklische Dicarbonsäure-Komponenten verwendet Anstelle der Dicarbonsäure kann auch ihr entsprechender Diester, üblicherweise Dimethylester, eingesetzt werden.

Typische Beispiele für Polyester sind Polyethylenterephthalat (PET), Polybutylenterephthalat (PBT), Polytrimethylenterephthalat (PTT), Polyethylenfuranoat (PEF), Polytrimethylenfuranoat (PTF), Polybutylensuccinat (PBS) und Polyethylennaphthalat (PEN), die entweder als Homopolymer oder als Copolymere zum Einsatz kommen.

Polyester sind auch Polymere mit sich wiederholenden Estergruppen mit der allgemeinen Struktur H-[O-R-CO]ₓ-OH, wobei R üblicherweise ein aliphatischer Kohlenwasserstoff mit 1 bis 15 Kohlenstoffatomen, ein aromatischer Kohlenwasserstoff mit 1 bis 3 aromatischen Ringen, ein zyklischer Kohlenwasserstoff mit 4 bis 10 Kohlenstoffatomen oder ein heterozyklischer Kohlenwasserstoff mit 1 bis 3 Sauerstoff- oder Stickstoffatomen und 3 bis 10 Kohlenstoffatomen ist.

Ein Beispiel sind Polyhydroxyalkanoate mit der allgemeinen Struktur H-[O-C(R)H-(CH₂)ₙ-CO]ₓ-OH, wobei R üblicherweise ein Wasserstoff oder ein aliphatischer Kohlenwasserstoff mit 1 bis 15 Kohlenstoffatomen und n gleich 1 bis 10 ist. Beispiele sind Poly-4-hydroxybutyrat und Poly-3-hydroxyvalerat.

Ein weiteres Beispiel sind Polylactide mit der allgemeinen Struktur H-[O-C(R)H-CO]ₓ-OH, wobei R üblicherweise eine Methylgruppe oder ein aliphatischer Kohlenwasserstoff mit 1 bis 15 Kohlenstoffatomen ist.

Ein weiteres Beispiel ist die Polyglycolsäure mit der allgemeinen Struktur H-[O-CH₂-CO]ₓ-OH.

Polyester sind auch Polymere, welche durch Ringöffnungspolymerisation aus heterozyklischen Monomeren mit einer Estergruppe, wie zum Beispiel Polycaptrolacton aus Caprolacton, oder durch Ringöffnungspolymerisation aus heterozyklischen Monomeren mit wenigstens zwei Estergruppen, wie zum Beispiel Polylactid aus Lactid, hergestellt werden.

Das am meisten verbreitete Polylactid ist die Polymilchsäure mit der Struktur H-[O-C(CH₃)H-CO]ₓ-OH. Durch die Chiralität der Milchsäure existieren verschiedene Formen der Polymilchsäure. Homopolymere sind Poly-L-Lactid (PLLA), das üblicherweise aus L,L-Lactid hergestellt wird, und Poly-D-Lactid (PDLA), das üblicherweise aus D,D-Lactid hergestellt wird. Copolymere wie Poly-(L-Lactid-co-D,L-Lactid) enthalten geringe Mengen an Lactid-Einheiten mit einer Chiralität, die sich vom Hauptmonomer unterscheidet.

Polyester können auch durch Biosynthese mit Hilfe von Mikroorganismen oder in pflanzlichen Zellen hergestellt werden, woraus sie durch Aufschluss der Zelle gewonnen werden.

Bei den geeigneten Polymeren kann es sich um Homopolymere handeln. Trotz der Bezeichnung Homopolymer kann sich im Herstellprozess ein geringer Anteil an Comonomeren bilden. So ist bei der Herstellung von Polyethylenterephthalat die Bildung von Diethylenglykol aus Ethylenglykol bekannt. Viele geeignete Polymere sind jedoch Copolymere, die einen gewissen Anteil an Comonomer enthalten. Die Comonomere können als Teil der Monomere in den Herstellprozess des Polymers eingeführt werden, oder sie bilden sich als Teil des Herstellprozesses, wodurch sich üblicherweise eine zufällige Verteilung im letztendlichen Polymer ergibt. Die Comonomere können auch als Blöcke, hergestellt aus unterschiedlichen Monomeren, eingefügt werden, woraus sich sogenannte Blockcopolymere ergeben.

Bei den geeigneten Polymeren kann es sich um Polymergemische handeln, welche eine beliebige Anzahl und Menge von unterschiedlichen Polymertypen enthalten können. Eine kleine Menge eines Polymers kann als Nukleierungsmittel in andern Polymeren wirken und dadurch dessen Kristallisationsrate erhöhen.

Spezifische Polymergemische können untereinander wechselwirkende Kristallstrukturen mit einem Kristallisationsverhalten bilden, das von den einzelnen Komponenten abweicht. Ein Beispiel dafür ist ein Gemisch aus PDLA und PLLA, welches eine stereokomplexe Kristallstruktur mit erhöhter Kristallinität bildet.

Nach der Polymerisation hat jede Polymerkette kettenbeendende Gruppen mit üblicherweise der Funktionalität von wenigstens einem seiner Monomere. Als Beispiel kann eine Polyesterkette eine oder mehrere Hydroxyl- und/oder Carboxylendgruppen haben. Eine Polyamidkette kann eine oder mehrere Hydroxyl- und/oder Aminendgruppen haben. Solche Endgruppen können durch ein sogenanntes Endcapping-Reagens oder durch eine Abbaureaktion modifiziert sein. Obwohl dies bei den vorstehend genannten allgemeinen Strukturen nicht spezifisch erwähnt ist, können geeignete Polymere derartige modifizierte Endgruppen haben.

Dem Polymer können Additive zugegeben werden. Als Additive eignen sich zum Beispiel Katalysatoren, Farbstoffe und Pigmente, UV Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen.

Bei dem Polymer kann es sich um ein Neumaterial oder um ein Rezyklat handeln. Als Rezyklate werden wiederaufbereitete Polymere aus den Herstell- und Verarbeitungsprozessen (post industrial) oder nach dem Konsumentengebrauch gesammelte und wiederaufbereitete Polymere (post consumer) bezeichnet.

Zur thermischen Behandlung der Polyestern wie Polyethylenterephthalat und seinen Copolymeren werden erfindungsgemäss Prozessgase mit geringem Sauerstoffgehalt, wie zum Beispiel Stickstoff, Kohlendioxid, Edelgase, Wasserdampf oder Gemische dieser Gase, verwendet. Derartige Prozessgase werden üblicherweise als Inertgase bezeichnet. Inertgase kommen insbesondere dann zum Einsatz, wenn es sich bei den Schüttgütern um sauerstoffempfindliche Schüttgüter handelt.

Schüttgüter aus Polyestern werden als sauerstoffempfindliche Schüttgüter bezeichnet, wenn sich die Schüttgüter während der thermischen Behandlung durch die Einwirkung von Sauerstoff stärker verändern, als dies bei einer thermischen Behandlung ohne Sauerstoff der Fall wäre. Derartige Veränderungen können zum Beispiel zur Verfärbung, Bildung von Spaltprodukten und/oder Reduktion des Molekulargewichtes des Schüttgutes führen.

Trotz der Bezeichnung Inertgas kann das Prozessgas geringe Mengen an Sauerstoff enthalten, wobei dieser Sauerstoff zum Beispiel durch Leckagen ins Prozessgas eingedrungen oder durch unvollständige Verbrennung im Prozessgas zurück geblieben sein kann.

Als thermischer Behandlungsprozess von Schüttgütern wird jeder Prozess bezeichnet, in dem Schüttgüter unter Einwirkung eines Prozessgases für eine bestimmte Verweilzeit bei einer bestimmten Temperatur behandelt werden. Verweilzeit und Temperatur können über einen sehr breiten Bereich variiert werden, wobei Verweilzeiten von wenigen Minuten bis mehreren hundert Stunden und Temperaturen zwischen der Siedetemperatur des Prozessgases und der Schmelz- oder Zersetzungstemperatur des Schüttgutes denkbar sind.

Die thermische Behandlung erfolgt üblicherweise in einem Behandlungsraum, der das Schüttgut und das Prozessgas aufnehmen kann. Der entsprechende Behandlungsraum wird üblicherweise durch Reaktoren gebildet. Geeignete Reaktoren können konisch oder zylindrisch, mit rundem oder eckigem Querschnitt gebaut sein. Geeignete Reaktoren weisen zumindest eine Eintrittsöffnung und eine Austragsöffnung für das Schüttgut sowie zumindest eine Eintrittsöffnung und eine Austragsöffnung für das Prozessgas auf. Die Reaktoren können verschiedene Einbauten zur Beeinflussung des Produktflusses und/oder Gasflusses aufweisen.

Die Einwirkung des Prozessgases erfolgt dabei derart, dass organische Substanzen aus dem Polymer vom Prozessgas aufgenommen und aus dem Behandlungsraum ausgetragen werden.

Bevorzugt erfolgt die thermische Behandlung kontinuierlich oder semi-kontinuierlich, wobei dem Reaktor sowohl das Prozessgas wie auch das Schüttgut entweder kontinuierlich oder in einzelnen Chargen, die kleiner sind als das Reaktorvolumen, zugeführt wird. Das Prozessgas wird dabei entweder im Gegenstrom, Kreuzstrom oder Gegenstrom zur Fliessrichtung der Schüttgüter geführt. Eine bevorzugte Ausführung sieht die kontinuierliche thermische Behandlung in einem Wanderbettreaktor im Gegenstrom vor.

Alternativ ist auch eine diskontinuierliche Fahrweise denkbar, bei der eine gegebene Schüttgutmenge in einem Reaktor von Prozessgas durchströmt wird.

Die Grösse der Reaktoren ergibt sich durch die Anforderungen der thermischen Behandlung (Verweilzeit und Durchsatz). Beispiele für entsprechende Reaktoren sind aus der EP-2 398 598 A1 bekannt.

Die organischen Substanzen, die vom Prozessgas aufgenommen werden, umfassen jegliche organische Substanzen, die während der thermischen Behandlung eines Schüttgutes aus dem Schüttgut freigesetzt werden und in Gasform oder gelöst im Prozessgas vorliegen. Handelt es sich bei dem Schüttgut um ein Polymer, umfassen die organischen Substanzen hauptsächlich Rückstände aus dem Polymerisationsprozess, Spaltprodukte aus dem Polymer und den im Polymer enthaltenen Additiven, sowie Verunreinigungen, die zusammen mit den Polymeren in den Behandlungsprozess eingetragen wurden, und deren Spaltprodukte. Üblicherweise handelt es sich bei den organischen Substanzen um Kohlenwasserstoffe, wobei Fremdatome, wie Stickstoff, Phosphor, Schwefel, Chor, Fluor oder metallische Komplexbildner, eingebunden sein können.

Erfindungsgemäss wird zumindest ein Teil des Prozessgases im Kreislauf geführt. Dazu wird Prozessgas aus dem Behandlungsraum, vorzugsweise Reaktor, zur thermischen Behandlung eines Schüttgutmaterials der katalytischen Verbrennung zugeführt und anschliessend wieder in den Behandlungsraum zurückgeführt.

Erfindungsgemäss umfasst das Verfahren zur Reinigung eines Prozessgases aus einem thermischen Behandlungsprozess von Schüttgütern zumindest einen Schritt einer katalytischen Verbrennung.

Erfindungsgemäss enthält das Prozessgas vor der Reinigung keinen Sauerstoff oder eine Sauerstoffmenge, die geringer ist als eine Sauerstoffmenge, die zur vollständigen Verbrennung der organischen Verunreinigungen im Prozessgas nötig ist. Somit muss dem Prozessgas vor der katalytischen Verbrennung Sauerstoff zugesetzt werden. Der Sauerstoff wird in Form von mindestens einem Sauerstoff oder Ozon enthaltenden Gas zugeführt, wobei häufig Luft zum Einsatz kommt.

Die Zufuhr des sauerstoffhaltigen Gases erfolgt mittels einer Zufuhrleitung in das Prozessgas, wobei diese Leitung Armaturen zur Regelung und Messung der zugeführten Gasmenge aufweisen kann.

Erfindungsgemäss wird das Prozessgas zumindest teilweise im Kreislauf geführt. Bei sauerstoffempfindlichen Schüttgütern im thermischen Behandlungsprozess muss somit der Sauerstoffgehalt im gereinigten Prozessgas gering gehalten werden.

Sauerstoff liesse sich durch sogenannte Deoxer oder durch Adsorption aus dem Prozessgas entfernen. Dies ist jedoch apparativ aufwendig und teuer. Vorteilhafter ist es, die Sauerstoffzufuhr zum verunreinigten Prozessgas derart zu regeln, dass die zugegebene Sauerstoffmenge der für die Verbrennung benötigten Sauerstoffmenge entspricht oder diese nur geringfügig übersteigt.

Vorzugsweise wird so viel sauerstoffhaltiges Gas zudosiert, dass der nach dem Katalysator gemessene durchschnittliche Sauerstoffgehalt 0-500 ppm v/v, bevorzugt 12-150 ppm v/v, beträgt oder dass der nach dem Katalysator gemessene durchschnittliche Kohlenmonoxidgehalt 0-200 ppm v/v, bevorzugt 2-50 ppm v/v beträgt. Die Durchschnittswerte beziehen sich dabei auf langfristige Werte, zum Beispiel über mehrere Stunden, bevorzugt über 2 Stunden, berechnet. Eine Hydrierung des restlichen Sauerstoffes oder eine Bindung von restlichem Kohlenmonoxid und/oder Sauerstoff, zum Beispiel durch Adsorption, ist bei derart geringen Restmengen üblicherweise nicht notwendig. Trotzdem kann eine weitere Sauerstoffreduktion für die Behandlung von stark sauerstoffempfindlichen Schüttgütern hinzugefügt werden.

Die erfindungsgemässe Reinigung des verunreinigten Gases erfolgt durch katalytische Verbrennung. Bei der katalytischen Verbrennung erfolgt die Umsetzung organischer Substanzen mit Sauerstoff in Gegenwart einer katalytisch aktiven Substanz im Wesentlichen zu CO₂ und Wasser. Dabei reduziert die katalytisch aktive Substanz die Aktivierungsenergie der Oxidationsreaktion, wodurch die Verbrennung bei reduzierter Temperatur erfolgen kann. Üblicherweise erfolgt die katalytische Verbrennung in der Gegenwart eines Feststoffkatalysators. Als Katalysatormaterial werden zum Beispiel Edelmetalle oder Metalloxide verwendet.

Bevorzugte Katalysatormaterialien enthalten einen Anteil an Platin, Palladium oder Rhodium als Edelmetalle.

Bevorzugte Metalloxide umfassen Nebengruppenelementmetalle, insbesondere aus der vierten Periode des Periodensystems der Elemente (Sc, Ti, V, Cr, Mn, Fe, Co, Ni, Cu, Zn), wobei es sich als besonders vorteilhaft erwiesen hat, wenn das Katalysatormaterial zumindest Manganoxid, Eisenoxid, Kupferoxid oder Kobaltoxid enthält. Weitere Angaben über Zusammensetzung und Anwendung derartiger Katalysatoren können aus der DE 10 2004 006 861 A1 entnommen werden.

Das Katalysatormaterial kann dabei als Schüttgut (Vollmaterial) vorliegen oder auf ein Trägermaterial aufgebracht sein, wobei es sich bei geeigneten Trägermaterialien zum Beispiel um Wabenstrukturen oder poröse Schüttgutkugeln handeln kann. Bevorzugterweise werden als Trägermaterial Aluminiumoxidkugeln verwendet, die zusätzlich eine Sauerstoff adsorbierende Schicht aufweisen.

Die bevorzugte Schüttdichte des erfindungsgemäss eingesetzten Katalysatorschüttgutes (als Vollmaterial oder auf Trägermaterial) liegt in einem Bereich von etwa 100 bis 1500 kg/dm³, insbesondere 200 bis 900 kg/dm³.

Die bevorzugte Korngrösse des erfindungsgemäss eingesetzten Katalysatorschüttgutes liegt in einem Bereich von etwa 0.1 bis 50 mm, insbesondere 1-10 mm.

Die bevorzugte spezifische Oberfläche des erfindungsgemäss eingesetzten Katalysatorschüttgutes liegt in einem Bereich von etwa 50 bis 500 m²/g, insbesondere 60 bis 300 m²/g.

Bevorzugterweise liegt das Katalysatorschüttgut oder die Wabenstruktur als sogenanntes Katalysatorbett in einem Katalysatorbehälter vor und wird vom Prozessgas zusammen mit der zur Verbrennung notwendigen Sauerstoffmenge von einer Eintrittsseite zu einer Austrittsseite des Katalysatorbettes durchströmt. Die Querschnittsfläche des Katalysatorbettes wird derart gewählt, dass sich eine Lineargeschwindigkeit des Prozessgases bzw. eine Leerrohr-Geschwindigkeit (Betriebs-Volumenstrom / Katalysatorschüttungs-Querschnitt in Richtung der Flussrichtung des Gases) in einem Bereich von etwa 0.3 bis 5 m/s ergibt, wobei ein Druckverlust von 5 mbar bis 100 mbar, insbesondere 10 mbar bis 50 mbar entsteht. Die Schichtdicke des Katalysatorbettes soll über deren ganzen Querschnitt konstant sein und zwischen 100 mm und 1000 mm, insbesondere zwischen 200 mm und 500 mm betragen. Dabei soll die Raumgeschwindigkeit (Norm-Volumenstrom des Prozessgases dividiert durch das Katalysatorvolumen) in einem Bereich von 1000 bis 60000 h⁻¹, insbesondere von 3000 bis 24000 h⁻¹ bevorzugt von 4000 bis 12000 h⁻¹ liegen.

Die Verbrennung im Katalysatorbett findet vorzugsweise in einem Temperaturbereich von 150 °C bis 600 °C, insbesondere von 170 °C bis 450 °C statt.

Die Verbrennung muss dabei nicht zu 100% erfolgen. Da aber bei unvollständiger Verbrennung Nebenprodukte wie zum Beispiel CO oder kurzkettige organische Säuren entstehen können, wird ein möglichst hoher Umsatzgrad von über 95%, bevorzugt von über 98% und insbesondere von über 99% angestrebt. Die Restmenge an organischen Verunreinigungen im Prozessgas soll nach der katalytischen Verbrennung zwischen 0 und 50 cm³/m³, insbesondere zwischen 0 und 20 cm³/m³ betragen.

Das verunreinigte Prozessgas kann vor der katalytischen Verbrennung weitere Prozessschritte durchlaufen, wie zum Beispiel eine Druckerhöhung, einen Prozessschritt zur Abscheidung von festen Verunreinigungen, zum Beispiel mittels eines Zyklonabscheiders und/oder eines Filters, eine Vermischung mit dem zugeführten sauerstoffhaltigen Gas, zum Beispiel mittels eines statischen Mischers, sowie eine Erwärmung zur Erhöhung der Temperatur auf eine geeignete Verbrennungstemperatur, zum Beispiel mittels eines Wärmetauschers zur Wärmerückgewinnung und/oder mittels eines Erhitzers.

Gegebenenfalls kann auch das Katalysatorbett direkt beheizt werden, zum Beispiel durch externe Wärmequellen oder durch die Verbrennungswärme der Verunreinigungen.

Das gereinigte Prozessgas kann nach der katalytischen Verbrennung weitere Prozessschritte durchlaufen, wie zum Beispiel eine Kühlung, eine Trocknung, eine Druckerhöhung, einen Prozessschritt zur Abscheidung von festen Verunreinigungen zum Beispiel mittels eines Zyklonabscheiders und/oder eines Filters, eine Erwärmung sowie eine Vermischung mit Additiven oder weiteren Prozessgasströmen.

Vor dem Eintritt in den Katalysatorbehälter wird dem verunreinigten Prozessgas Sauerstoff zugeführt.

Zur Regelung der Sauerstoffzufuhr wird zumindest eine Gaskomponente gemessen, über die sich die Menge an benötigtem Sauerstoff ermitteln und einstellen lässt. Die Sauerstoffzufuhr lässt sich zum Beispiel durch einen Stellbefehl zu einem Regelventil in einer Zufuhrleitung für Pressluft zum Prozessgas erreichen, wobei der Stellbefehl von einer Steuereinheit ausgehend von Messwerten der Gaskomponente berechnet wird.

Die Messung der Gaskomponente erfolgt bevorzugt in einer Messkammer, wie dies in der CH-698 275 A2 beschrieben ist.

Wesentlich für den Betrieb der katalytischen Verbrennung sind die geregelte Einspeisung des sauerstoffhaltigen Gases in das Prozessgas, das Aufheizen des Prozessgases auf eine geeignete Verbrennungstemperatur in einem Wärmetauscher und die eigentliche Verbrennung im Katalysatorbett. Zur Optimierung des Prozesses wird vorzugsweise zudem Wärme aus dem Prozessgas nach der katalytischen Verbrennung in das Prozessgas vor dem Wärmetauscher zum Aufheizen des Prozessgases zurückgeführt. Dies kann vorzugsweise mittels eines Wärmetauschers zur Energierückgewinnung erfolgen.

Das Aufheizen des Prozessgases erfolgt beispielsweise in einem Wärmetauscher, der zum Beispiel als Elektroerhitzer mit Heizstäben in direktem Kontakt mit Prozessgas oder als Platten- oder Rohrbündelwärmetauschern mit indirektem Wärmetransfer von einem Heizmedium zum Prozessgas ausgeführt sein kann. Derartige Wärmetauscher werden auch als Prozessgaserhitzer bezeichnet.

Die Verbrennung im Katalysatorbett erfolgt dabei in einem Katalysatorbehälter, in dem das Katalysatorbett derart angeordnet ist, dass alles Prozessgas auf dem Weg vom Eintritt in den Katalysatorbehälter zum Austritt aus dem Katalysatorbehälter das Katalysatorbett durchströmen muss.

Die Rückführung der Wärme aus dem Prozessgas erfolgt beispielsweise in einem Wärmetauscher, der zum Beispiel als Platten- oder Rohrbündelwärmetauscher mit indirektem Wärmetransfer von Prozessgas nach der katalytischen Verbrennung zum Prozessgas vor dem Wärmetauscher zum Aufheizen des Prozessgases ausgeführt sein kann. Derartige Wärmetauscher zur Energierückgewinnung werden auch als Economizer bezeichnet.

Gemäss einer bevorzugten Ausführungsform der vorliegenden Erfindung werden das Katalysatorbett, der Prozessgaserhitzer sowie der Economizer von einem gemeinsamen Mantel umschlossen. Der bevorzugte Aufbau ist derart, dass der Economizer in einer Linie mit dem Prozessgaserhitzer angeordnet ist und der Prozessgaserhitzer in einer Linie mit dem Katalysatorbett angeordnet ist. Insbesondere ist der Economizer über dem Prozessgaserhitzer und dieser wiederum über dem Katalysatorbett angeordnet.

Ist der Prozessgaserhitzer als Elektroerhitzer ausgeführt, kann das Heizregister direkt in den Eintrittsbereich des Katalysatorbehälters integriert werden. Ist der Prozessgaserhitzer als Rohrbündelwärmetauscher ausgeführt, kann das zu reinigende Prozessgas die Rohre des Wärmetauschers in einer Linie mit der Durchflussrichtung durch den Katalysatorbehälter durchströmen.

Ist der Economizer als Rohrbündelwärmetauscher ausgeführt, kann das zu reinigende Prozessgas die Rohre des Wärmetauschers in einer Linie mit der Durchflussrichtung durch den Prozessgaserhitzer durchströmen.

Eine Ausführungsform der vorliegenden Erfindung sieht vor, dass durchgehende Rohre für den Economizer und den Prozessgaserhitzer verwendet werden.

Der gemeinsame Mantel hat bevorzugterweise den gleichen Durchmesser über die gesamte Länge der verbundenen Prozessschritte. Liegen unterschiedliche Durchmesser für einzelne Prozessstufen vor, so erfolgt ein Übergang von einem Durchmesser zum nächsten ohne zwischenzeitliche Einschnürung auf ein dazwischen liegendes Rohr. Das Durchmesser-Verhältnis von der Prozessstufe mit dem grössten Durchmesser zur Prozessstufe mit dem kleinsten Durchmesser soll dabei 2:1 und insbesondere 1.6:1 nicht überschreiten. Durch die Gasführung im gemeinsamen Mantel ergibt sich der Vorteil, dass das zu reinigende Prozessgas gleichmässig dem Katalysatorbett zugeführt wird.

Im unteren Bereich des Katalysatorbehälters befindet sich üblicherweise eine Gasaustrittsöffnung, von der das Prozessgas zu einer üblicherweise seitlichen Eintrittsöffnung in den Economizer geführt wird. Die dazu benötigte Rückführleitung kann als Rohrleitung oder Fliesskanal innerhalb oder ausserhalb des gemeinsamen Mantels ausgeführt sein.

Das Katalysatormaterial kann von einem Trennelement, das zwar Gas aber kein Katalysatormaterial durchlässt, im mittleren Teil des Katalysatorbehälters vorgelegt werden.

Das Trennelement ist üblicherweise ein Sieb, das so im Katalysatorbehälter angeordnet ist, dass alles Prozessgas das Sieb und das sich darauf befindende Katalysatorbett durchströmen muss.

Der Katalysatorbehälter ist vorzugsweise derart gebaut, dass sich der Bereich mit dem Sieb und dem Katalysatorbett vom darüber liegenden Prozessgaserhitzer trennen lässt, um einen Austausch von Katalysatormaterial zu ermöglichen.

Da es in einem Apparat mit gemeinsamem Mantel und insbesondere in Rohrbündelwärmetauschern nur zu einer geringen Durchmischung des Prozessgases kommt, sollte das sauerstoffhaltige Gas, bevorzugt noch vor Eintritt in den Economizer, möglichst homogen im Prozessgas verteilt werden. Dazu kann zum Beispiel ein Mischelement, wie ein statischer Mischer oder eine Verteildüse verwendet werden. Alternativ kann ein Mischelement auch im oben beschriebenen gemeinsamen Mantel angeordnet sein.

Im Stand der Technik sind Adsorptionsschritte zur Entfernung von sogenannten Katalysatorgiften bekannt. Als Katalysatorgifte sind zumeist anorganische Substanzen bekannt, die sich auf der Oberfläche des Katalysatormaterials ablagern und damit zu einer direkten Deaktivierung des Katalysators für die katalytische Verbrennung führen. Übliche Katalysatorgifte sind Halogene, Schwefel und Schwermetalle. Die Adsorption der Katalysatorgifte kann am Adsorptionsmaterial oder an einer adsorbierenden Beschichtung auf einem Trägermaterial erfolgen. Übliche adsorbierende Beschichtungen sind Basen wie Natriumhydroxid, Kaliumhydroxid oder auch Calciumoxid, sowie Natrium- oder Kaliumcarbonate.

Überraschend wurde gefunden, dass sich derartige Adsorptionsmaterialien auch zur Entfernung von hochsiedenden organischen Substanzen oder organischen Substanzen mit hoher Verbrennungstemperatur eignen. Derartige Substanzen führen bei unvollständiger Verbrennung zu einer Deaktivierung des Katalysators für die katalytische Verbrennung. Insbesondere hochsiedende Kohlenwasserstoffe wirken deaktivierend, da sie bei unvollständiger Verbrennung zu Kohlenstoffablagerungen auf dem Katalysatormaterial führen können oder direkt die Poren des Trägermaterials, auf dem das Katalysatormaterial aufgebracht ist, verstopfen.

Gemäss der vorliegenden Erfindung durchläuft das verunreinigte Gas vor der katalytischen Verbrennung einen Schritt zur Adsorption von hochsiedenden organischen Substanzen oder organischen Substanzen mit hoher Verbrennungstemperatur an einem festen Adsorptionsmaterial in einem Schutzbett.

Das Schutzbett kann dabei als eine mit einem Adsorptionsmaterial beschichtete Oberfläche ausgeführt sein. Bevorzugt besteht das Schutzbett jedoch aus einem als Schüttgut vorliegenden festen Material, welches vollständig aus einem Adsorptionsmaterial bestehen kann oder mit einem Adsorptionsmaterial beschichtet sein kann. Bevorzugt liegt das Schutzbett in einem Adsorptionsbehälter vor. Das Prozessgas durchströmt den Adsorptionsbehälter von einer Eintrittsseite zu einer Austrittsseite und durchströmt dabei das Adsorptionsbett.

Das Schutzbett kann derart gewählt werden, dass es Substanzen aus dem Prozessgas chemisch bindet, oder dass es Substanzen aus dem Prozessgas physikalisch anlagert.

Die Eintrittstemperatur des Prozessgases in den Adsorptionsbehälter kann einen breiten Bereich umfassen. Sie muss allerdings hoch genug sein, um allfällige erforderliche chemische Reaktionen zu gewährleisten, und tief genug sein, um eine ausreichende Anlagerung physikalisch zu bindender Substanzen zu ermöglichen.

Erfindungsgemäss erfolgt die Einstellung der Temperatur derart, dass hochsiedende Substanzen kondensieren und vom Adsorptionsmaterial aufgenommen werden können. Enthält das Prozessgas Wasser, so wird die Temperatur derart gewählt, dass keine Kondensation von Wasser im Schutzbett erfolgt. Für die erfindungsgemässe Behandlung von Polyestern, vorliegend als Neumaterial oder als Rezyklat, liegt die Temperatur im Bereich von 100 bis 250°C, bevorzugter über 120°C und besonders bevorzugt unter 170°C, insbesondere bevorzugt von 120°C bis 170°C.

Zur Einstellung der Temperatur kann das Prozessgas mittels Wärmetauschern aufgeheizt oder üblicherweise gekühlt werden. Die Kühlung erfolgt bevorzugt in Doppelmantelrohren oder Rohrbündelwärmetauschern, um Ablagerungen von kondensierenden Substanzen zu vermeiden.

Die Kontaktzeit des Prozessgases im Schutzbett beträgt dazu von einer Zehntelsekunde bis zu einigen Minuten. Bevorzugt sind Kontaktzeiten im Bereich von 2 bis 20 Sekunden.

Insbesondere wird das Adsorptionsmaterial derart gewählt, dass hochsiedende Substanzen aus dem Prozessgas entfernt werden, wobei zumindest eine Reduktion auf unter 20%, bevorzugt auf unter 10% ihres Ausgangswerts im Prozessgas erfolgen soll.

Beispiele für erfindungsgemäss einsetzbare Adsorptionsmaterialen sind Zeolithe, Silikagele, Aktivkohle, aktiviertes Aluminiumoxid und Aluminiumdioxid.

Die vorliegende Erfindung betrifft somit weiterhin eine Vorrichtung zur Durchführung des vorstehend beschriebenen Verfahrens zur Reinigung eines Prozessgases aus einem Reaktor zur thermischen Behandlung von Polyestern wie Polyethylenterephthalat und seinen Copolymeren, umfassend
einen Reaktor zur thermischen Behandlung von Polyestern wie Polyethylenterephthalat und seinen Copolymeren;
zumindest ein Katalysatorbett, wobei das zumindest eine Katalysatorbett in einem Katalysatorbehälter angeordnet ist, der eine Eintrittsseite und eine Austrittsseite für das Prozessgas aufweist und das Prozessgas von einer Eintrittsseite zu einer Austrittsseite des Katalysatorbehälters strömt,
zumindest eine Verbindungsleitung, die eine Austrittsseite des Reaktors zur thermischen Behandlung von Polyestern mit einer Eintrittsseite des Katalysatorbehälters verbindet;
zumindest einen Wärmetauscher zum Aufheizen des Prozessgases der vor der Eintrittsseite des Katalysatorbehälters angeordnet ist; zumindest einen Wärmetauscher zur Energierückgewinnung der dem zumindest einem Wärmetauscher zum Aufheizen des Prozessgases vorgeschaltet und gleichzeitig der Austrittsseite des Katalysatorbehälters nachgeschaltet ist;
zumindest eine Vorrichtung zur Zufuhr eines sauerstoffhaltigen Gases, welche vor der Eintrittsseite des Katalysatorbehälters angeordnet ist;
zumindest eine Verbindungsleitung, die eine Eintrittsseite des Reaktors zur thermischen Behandlung von Polyestern mit einer Austrittsseite des Katalysatorbehälters verbindet,
dadurch gekennzeichnet, dass das zumindest eine Katalysatorbett, der zumindest eine Wärmetauscher zum Aufheizen des Prozessgases sowie der zumindest eine Wärmetauscher zur Energierückgewinnung von einem gemeinsamen Mantel umschlossen sind, und dass dem Katalysatorbehälter zumindest ein Schutzbett vorgeschaltet ist, das hochsiedende organische Substanzen oder organische Substanzen mit hoher Verbrennungstemperatur, aus dem Prozessgasstrom entfernt.

Erfindungsgemäss können herkömmliche Anlagen zur thermischen Behandlung eines Schüttgutes in eine erfindungsgemässe Vorrichtung umgebaut werden, in welcher eines der erfindungsgemässen Verfahren durchgeführt werden kann. Die vorliegende Erfindung betrifft somit auch ein Verfahren zum Umbau einer Anlage zur Nachkondensation von Polyestergranulat Neumaterial zu einer Anlage zur Nachkondensation von Polyestergranulat, das zumindest teilweise regranuliertes Polyesterrezyklat umfasst und zur Durchführung des vorstehend beschriebenen Verfahrens, wobei die Nachkondensation in fester Phase in einem Reaktor stattfindet, welcher von einem Prozessgas durchströmt wird, wobei das Prozessgas wobei das aus dem Reaktor austretende Prozessgas zumindest teilweise in den Reaktor zurückgeführt wird und vor der Rückführung in den Reaktor einen Schritt zur Reinigung in einer Vorrichtung zur katalytischen Verbrennung durchläuft,
dadurch gekennzeichnet, dass die Anlage zwischen dem Reaktor und der Vorrichtung zur katalytischen Verbrennung um folgende Prozessschritte erweitert wird :
- einen Schritt zum Kühlen des Prozessgases
- einen Schritt zur Adsorption von hochsiedenden organischen Komponenten in einem Schutzbett.

Die vorliegende Erfindung wird nachstehend anhand von nicht einschränkenden Beispielen näher erläutert.

### Vergleichsbeispiel 1

In einem Reaktor wurde ein Rezyklat, welches aus regranuliertem Polyethylenterephthalat aus PET Flaschen erhalten worden war, mit einem Durchsatz von 2.2 t/h in einem Stickstoffstrom von 15 m³/min (Normalbedingungen) als Prozessgas für 16 Stunden behandelt. Das Prozessgas (Stickstoff) wurde mit einem Anteil an organischen Substanzen von ca. 0.7 g/m³ bei 190°C aus dem Reaktor entnommen und zur Reinigung einer katalytischen Verbrennung zugeführt, wobei das verwendete Katalysatormaterial aus einem kugelförmigen Aluminiumoxid-Trägermaterial mit Edelmetallbeschichtung bestand. Die Verbrennung erfolgte bei 360°C mittels einer zugeführten Luftmenge derart, dass im Prozessgas nach der Verbrennung ein Sauerstoffgehalt von ca. 50 ppm vorlag. Dazu wurden 2.8 m³/h an Luft zugeführt. Zur Überwachung des Verbrennungsprozesses wurde der CO-Gehalt im Prozessgas nach der Verbrennung gemessen.

Das Gas wurde vor der Verbrennung durch einen Economizer und einen Erhitzer geführt. Die Temperatur nach dem Economizer betrug 323°C. Im Erhitzer musste das Prozessgas noch auf 360°C erwärmt werden. Das Gas wurde nach der Verbrennung wiederum durch den Economizer geführt und danach in einem mit Kühlwasser gekühlten Wärmetauscher auf 40°C abgekühlt. Sowohl der Economizer, der Erhitzer wie auch das Katalysatorbett befanden sich in einem gemeinsamen Mantel mit einer Zufuhröffnung und einer Wegführöffnung für das Prozessgas.

Der Energieverbrauch im Erhitzer vor dem Katalysatorbett betrug 13 kWh.

Während einer 6 monatigen Betriebsdauer wurde eine Zunahme des CO-Gehaltes im Prozessgas beobachtet. Im Kühler wurde eine mit der Betriebsdauer zunehmende Menge an flüssigem Kondensat aus organischen Substanzen gebildet. Nach 6 monatiger Betriebsdauer erreichte die Kondensatmenge ca. 2 kg/Woche. Dies wurde zum Anlass genommen, das Katalysatormaterial auszutauschen. Das Katalysatormaterial war von einem schwarzen Belag überzogen. Eine Aktivitätsmessung mit Propan zeigte eine stark verminderte katalytische Wirkung.

### Vergleichsbeispiel 2

Vergleichsbeispiel 1 wurde mit frischem Katalysatormaterial wiederholt, allerdings erfolgte die Verbrennung bei 440°C.

Die Temperatur nach dem Economizer betrug 387°C. Im Erhitzer musste das Prozessgas noch auf 440°C erwärmt werden.

Nach 9 monatiger Betriebsdauer erreicht die Kondensatmenge wieder ca. 2 kg/Woche. Dies wurde zum Anlass genommen, das Katalysatormaterial auszutauschen. Das Katalysatormaterial war von einem schwarzen Belag überzogen. Der Energieverbrauch im Erhitzer vor dem Katalysatorbett betrug 19kWh.

Im Gegensatz zu Vergleichsbeispiel 1 konnte durch die Verwendung einer höheren Verbrennungstemperatur die Lebensdauer des Katalysatormaterials um ca. einen Faktor 1.5 verlängert werden.

Gleichzeitig hatte sich aber auch der Energieverbrauch um fast einen Faktor 1.5 erhöht.

### Beispiel 1

Vergleichsbeispiel 2 wurde mit frischem Katalysatormaterial wiederholt, allerdings wurde das Prozessgas (Stickstoff) aus dem Reaktor auf 140°C abgekühlt und in einem Schutzbett von hochsiedenden organischen Substanzen befreit. Das Schutzbett bestand aus einem Aluminiumoxidmaterial in Kugelform.

Die Temperatur nach dem Economizer betrug 377°C. Im Erhitzer musste das Prozessgas noch auf 440°C erwärmt werden. Der Energieverbrauch im Erhitzer vor dem Katalysatorbett betrug 22 kWh.

Während einer 3 jährigen Betriebsdauer wurde eine leichte Zunahme des CO-Gehaltes beobachtet. Im Kühler wurde jedoch keine wesentliche Menge an flüssigem Kondensat aus organischen Substanzen gebildet. Ein Referenzmuster des Katalysatormaterials war von einem schwarzen Belag überzogen. Eine Aktivitätsmessung mit Propan zeigte eine verminderte, jedoch noch ausreichende katalytische Wirkung. Ein Referenzmuster des Schutzbettmaterials zeigte einen Gehalt an organischem Material von ca. 8%, was bei einer Schutzbettmenge an 1600 kg einer Verschmutzung von 80 kg insgesamt oder ca. 0.8 kg/Woche entspricht. Dies wurde zum Anlass genommen, das Schutzbettmaterial auszutauschen.

Durch den Einsatz des Schutzbettes konnte die Lebensdauer des Katalysatormaterials um einen Faktor >6 im Vergleich zur ersten Betriebsweise bei niedrigerer Verbrennungstemperatur (Vergleichsbeispiel 1) und um einen Faktor >4 im Vergleich zur zweiten betriebsweise bei gleicher Verbrennungstemperatur (Vergleichsbeispiel 2) erhöht werden.

### Beispiel 2

Beispiel 1 wurde mit frischem Schutzbettmaterial, jedoch mit dem gleichen Katalysatormaterial fortgeführt; allerdings erfolgte die Verbrennung nur noch bei 390°C, und die Abkühlung des Prozessgases vor dem Schutzbett erfolgte auf 150°C.

Die Temperatur nach dem Economizer betrug 340°C. Im Erhitzer musste das Prozessgas noch auf 390°C erwärmt werden. Der Energieverbrauch im Erhitzer vor dem Katalysatorbett betrug 18 kWh.

Während einer 1 jährigen Betriebsdauer wurde eine leichte Zunahme des CO-Gehaltes im Prozessgas beobachtet. Im Kühler wurde jedoch keine wesentliche Menge an flüssigem Kondensat aus organischen Substanzen gebildet.

Durch den Einsatz des frischen Schutzbettmaterials konnte die Lebensdauer des Katalysatormaterials weiter erhöht werden, obwohl das Katalysatormaterial bereits stark belastet war. Gleichzeitig konnte der Energieverbrauch im Vergleich zu Vergleichsbeispiel 2 reduziert werden.

## Patentansprüche

1. Verfahren zur Reinigung eines Prozessgases aus einem Reaktor zur thermischen Behandlung von Polyestern wie Polyethylenterephthalat und seinen Copolymeren, das organische Verunreinigungen und optional eine Sauerstoffmenge enthält, welche geringer ist als zur vollständigen Verbrennung der organischen Verunreinigungen in diesem Verfahren erforderlich, umfassend folgende Schritte:
- Einleitung eines Prozessgases aus einem Reaktor zur thermischen Behandlung von Polyestern wie Polyethylenterephthalat und seinen Copolymeren, in zumindest einen Wärmetauscher zum Aufheizen des Prozessgases und Aufheizen des Prozessgases in diesem Wärmetauscher,
- Geregelte Zufuhr eines sauerstoffhaltigen Gases in das Prozessgas,
- Einleitung des mit dem sauerstoffhaltigen Gas versetzten Prozessgases in einen Katalysatorbehälter mit mindestens einem darin angeordnetem Katalysatorbett, welcher vom Prozessgas von einer Eintrittsseite zu einer Austrittsseite durchströmt wird,
- Verbrennung der organischen Verunreinigungen im Prozessgas in dem zumindest einen Katalysatorbett,
- Zumindest teilweise Rückführung des Prozessgases in den Reaktor zur thermischen Behandlung von Polyestern wie Polyethylenterephthalat und seinen Copolymeren,
**dadurch gekennzeichnet, dass** das Prozessgas vor Eintritt in den Katalysatorbehälter durch ein Schutzbett mit einem festen Adsorptionsmaterial geleitet wird, das hochsiedende organische Substanzen oder organische Substanzen mit hoher Verbrennungstemperatur aus dem Prozessgasstrom entfernt, wobei eine Temperatur im Bereich von 100 bis 250°C eingestellt wird, so dass die hochsiedenden Substanzen kondensieren und vom Adsorptionsmaterial aufgenommen werden können.

2. Verfahren nach Anspruch 1, **dadurch gekennzeichnet, dass** das Prozessgas vor dem Eintritt in das Schutzbett auf eine Temperatur im Bereich von 120 - 170°C eingestellt wird.

3. Vorrichtung zur Durchführung des Verfahrens gemäss Anspruch 1 oder 2 zur Reinigung eines Prozessgases aus einem Reaktor zur thermischen Behandlung von Polyestern wie Polyethylenterephthalat und seinen Copolymeren, umfassend
- einen Reaktor zur thermischen Behandlung von Polyestern wie Polyethylenterephthalat und seinen Copolymeren,
- zumindest ein Katalysatorbett, welches in einem Katalysatorbehälter angeordnet ist, der eine Eintrittsseite und eine Austrittsseite für das Prozessgas aufweist;
zumindest eine Verbindungsleitung, die eine Austrittsseite des Reaktors zur thermischen Behandlung von Polyestern mit der Eintrittsseite des Katalysatorbehälters verbindet;
- zumindest einen Wärmetauscher zum Aufheizen des Prozessgases, welcher vor der Eintrittsseite des Katalysatorbehälters angeordnet ist;
- zumindest einen Wärmetauscher zur Energierückgewinnung, welcher dem zumindest einem Wärmetauscher zum Aufheizen des Prozessgases vorgeschaltet und gleichzeitig der Austrittsseite des Katalysatorbehälters nachgeschaltet ist;
- zumindest eine Vorrichtung zur Zufuhr eines sauerstoffhaltigen Gases, welche vor der Eintrittsseite des Katalysatorbehälters angeordnet ist;
- zumindest eine Verbindungsleitung, die eine Eintrittsseite des Reaktors zur thermischen Behandlung von Polyestern mit einer Austrittsseite des Katalysatorbehälters verbindet,
**dadurch gekennzeichnet, dass** das zumindest eine Katalysatorbett, der zumindest eine Wärmetauscher zum Aufheizen des Prozessgases sowie der zumindest eine Wärmetauscher zur Energierückgewinnung von einem gemeinsamen Mantel umschlossen sind, und dass dem Katalysatorbehälter zumindest ein Schutzbett vorgeschaltet ist, das hochsiedende organische Substanzen oder organische Substanzen mit hoher Verbrennungstemperatur, aus dem Prozessgasstrom entfernt.

4. Vorrichtung nach Anspruch 3, **dadurch gekennzeichnet, dass** es sich bei dem zumindest einen Wärmetauscher zur Energierückgewinnung um einen Rohrbündelwärmetauscher handelt, dessen Rohrbündel vorzugsweise in einer Linie mit der Durchflussrichtung durch den zumindest einen Wärmetauscher zum Erwärmen des Prozessgases und mit der Durchflussrichtung durch das Katalysatorbett ausgerichtet ist.

5. Vorrichtung nach Anspruch 3, **dadurch gekennzeichnet, dass** eine Vorrichtung zum Verteilen des sauerstoffhaltigen Gases im Prozessgas zwischen der Vorrichtung zur Zufuhr des sauerstoffhaltigen Gases und der Eintrittsseite des Katalysatorbehälters angeordnet ist.

6. Verfahren zum Umbau einer Anlage zur Nachkondensation von Polyestergranulat-Neumaterial, zu einer Anlage zur Nachkondensation von Polyestergranulat, das zumindest teilweise regranuliertes Polyesterrezyklat umfasst, und zur Durchführung des Verfahrens gemäss Anspruch 1 oder 2,
wobei die Nachkondensation in fester Phase in einem Reaktor stattfindet, welcher von einem Prozessgas durchströmt wird, wobei das aus dem Reaktor austretende Prozessgas zumindest teilweise in den Reaktor zurückgeführt wird und vor der Rückführung in den Reaktor einen Schritt zur Reinigung in einer Vorrichtung zur katalytischen Verbrennung durchläuft, **dadurch gekennzeichnet, dass** die Anlage zwischen dem Reaktor und der Vorrichtung zur katalytischen Verbrennung um folgende Prozessschritte erweitert wird:
- einen Schritt zum Kühlen des Prozessgases
- einen Schritt zur Adsorption von hochsiedenden organischen Komponenten in einem Schutzbett.

## Claims

1. A process for purifying a process gas from a reactor for thermal treatment of polyesters such as polyethylene terephthalate and its copolymers, which contains organic impurities and optionally an amount of oxygen less than required for complete combustion of the organic impurities in said process, comprising the steps of:
- Introducing a process gas from a reactor for thermal treatment of polyesters such as polyethylene terephthalate and its copolymers, into at least one heat exchanger for heating the process gas, and heating the process gas in said heat exchanger,
- Controlled supply of an oxygen-containing gas to the process gas,
- Introduction of the process gas mixed with the oxygen-containing gas into a catalyst vessel with at least one catalyst bed arranged therein, through which the process gas flows from an inlet side to an outlet side,
- Combustion of the organic impurities in the process gas in the at least one catalyst bed,
- At least partial recirculation of the process gas into the reactor for thermal treatment of polyesters such as polyethylene terephthalate and its copolymers,
**characterized in that**, before entering the catalyst vessel, the process gas is passed through a protective bed containing a solid adsorbent material that removes high-boiling organic substances or organic substances with a high combustion temperature from the process gas stream, a temperature in the range of 100 to 250°C being set so that the high-boiling substances can condense and be absorbed by the adsorbent material.

2. The process according to claim 1, **characterized in that** the process gas is adjusted to a temperature in the range of 120-170°C before entering the protective bed.

3. Apparatus for carrying out the process according to claim 1 or 2 for purifying a process gas from a reactor for the thermal treatment of polyesters such as polyethylene terephthalate and its copolymers, comprising
- a reactor for the thermal treatment of polyesters such as polyethylene terephthalate and its copolymers,
- at least one catalyst bed arranged in a catalyst vessel having an inlet side and an outlet side for the process gas;
at least one connecting line connecting an outlet side of the reactor for thermal treatment of polyesters to the inlet side of the catalyst vessel;
- at least one heat exchanger for heating the process gas, which is arranged upstream of the inlet side of the catalytic vessel;
- at least one heat exchanger for energy recovery, which is connected upstream of the at least one heat exchanger for heating the process gas and at the same time downstream of the outlet side of the catalyst vessel;
- at least one device for supplying a oxygen-containing gas, which is arranged upstream of the inlet side of the catalyst vessel;
- at least one connecting line connecting an inlet side of the reactor for thermal treatment of polyesters to an outlet side of the catalyst vessel,
**characterized in that** the at least one catalyst bed, the at least one heat exchanger for heating the process gas, and the at least one heat exchanger for energy recovery are enclosed by a common jacket, and **in that** at least one protective bed is connected upstream of the catalyst vessel, which removes high-boiling organic substances or organic substances with a high combustion temperature from the process gas stream.

4. The apparatus according to claim 3, **characterized in that** the at least one heat exchanger for energy recovery is a tube bundle heat exchanger, the tube bundle of which is preferably aligned with the flow direction through the at least one heat exchanger for heating the process gas and with the flow direction through the catalyst bed.

5. Apparatus according to claim 3, **characterized in that** a device for distributing the oxygen-containing gas in the process gas is arranged between the device for supplying the oxygen-containing gas and the inlet side of the catalyst vessel.

6. Process for converting a plant for post-condensation of polyester granulate virgin material, to a plant for post-condensation of polyester granulate comprising at least partially regranulated polyester recyclate, and for carrying out the process according to claim 1 or 2, wherein the post-condensation takes place in solid phase in a reactor through which a process gas flows, the process gas leaving the reactor being at least partially reintroduced into the reactor and, before being reintroduced into the reactor, undergoes a purification step in a catalytic combustion device,
**characterized in that** the system is expanded by the following process steps between the reactor and the device for catalytic combustion:
- a step for cooling the process gas
- a step for adsorption of high boiling organic components in a protective bed.

## Revendications

1. Procédé de purification d'un gaz de traitement provenant d'un réacteur pour le traitement thermique de polyesters tels que le polyéthylène téréphtalate et ses copolymères, qui contient des impuretés organiques et éventuellement une quantité d'oxygène qui est inférieure à celle nécessaire pour la combustion complète des impuretés organiques dans ce procédé, comprenant les étapes suivantes :
- Introduction d'un gaz de traitement provenant d'un réacteur de traitement thermique de polyesters tels que le polyéthylène téréphtalate et ses copolymères, dans au moins un échangeur de chaleur pour chauffer le gaz de traitement et chauffer le gaz de traitement dans cet échangeur de chaleur,
- Alimentation régulée d'un gaz contenant de l'oxygène dans le gaz de processus,
- Introduction du gaz de traitement mélangé au gaz contenant de l'oxygène dans un récipient de catalyseur avec au moins un lit de catalyseur disposé dans celui-ci, lequel est traversé par le gaz de processus d'un côté d'entrée vers un côté de sortie,
- la combustion des impuretés organiques dans le gaz de traitement dans ledit au moins un lit de catalyseur,
- Recyclage au moins partiel du gaz de traitement dans le réacteur pour le traitement thermique de polyesters tels que le polyéthylène téréphtalate et ses copolymères,
**caractérisé en ce que** le gaz de traitement, avant d'entrer dans le réservoir de catalyseur, est conduit à travers un lit de protection avec un matériau adsorbant solide qui élimine du flux de gaz de traitement les substances organiques à point d'ébullition élevé ou les substances organiques à température de combustion élevée, une température dans la plage de 100 à 250°C étant réglée de sorte que les substances à point d'ébullition élevé se condensent et peuvent être absorbées par le matériau adsorbant.

2. Procédé selon la revendication 1, **caractérisé en ce que** le gaz de traitement est ajusté à une température comprise dans la plage de 120 à 170°C avant d'entrer dans le lit de protection.

3. Dispositif pour la mise en oeuvre du procédé selon la revendication 1 ou 2 pour la purification d'un gaz de traitement provenant d'un réacteur pour le traitement thermique de polyesters tels que le téréphtalate de polyéthylène et ses copolymères, comprenant
- un réacteur pour le traitement thermique de polyesters tels que le polyéthylène téréphtalate et ses copolymères,
- au moins un lit de catalyseur, qui est disposé dans un récipient de catalyseur, qui présente un côté d'entrée et un côté de sortie pour le gaz de traitement;
au moins un conduit de liaison qui relie un côté sortie du réacteur de traitement thermique de polyesters au côté entrée du réservoir de catalyseur;
- au moins un échangeur de chaleur pour chauffer le gaz de traitement, qui est disposé avant le côté d'entrée du réservoir de catalyseur;
- au moins un échangeur de chaleur pour la récupération d'énergie, qui est monté en amont de l'au moins un échangeur de chaleur pour le chauffage du gaz de traitement et qui est en même temps monté en aval du côté de sortie du réservoir de catalyseur ;
- au moins un dispositif d'amenée d'un gaz contenant de l'oxygène, qui est disposé devant le côté entrée du réservoir de catalyseur;
- au moins un conduit de liaison reliant un côté entrée du réacteur de traitement thermique des polyesters à un côté sortie du réservoir de catalyseur,
**caractérisé en ce que** le au moins un lit de catalyseur, le au moins un échangeur de chaleur pour le chauffage du gaz de traitement ainsi que le au moins un échangeur de chaleur pour la récupération d'énergie sont entourés d'une enveloppe commune, et **en ce qu'**en amont du réservoir de catalyseur est placé au moins un lit de protection qui élimine du flux de gaz de traitement des substances organiques à point d'ébullition élevé ou des substances organiques à température de combustion élevée.

4. Dispositif selon la revendication 3, **caractérisé en ce que** ledit au moins un échangeur de chaleur pour la récupération d'énergie est un échangeur de chaleur à faisceau tubulaire, dont le faisceau tubulaire est de préférence aligné avec la direction d'écoulement à travers ledit au moins un échangeur de chaleur pour chauffer le gaz de traitement et avec la direction d'écoulement à travers le lit de catalyseur.

5. Dispositif selon la revendication 3, **caractérisé en ce qu'**un dispositif de distribution du gaz contenant de l'oxygène dans le gaz de traitement est disposé entre le dispositif d'alimentation en gaz contenant de l'oxygène et le côté entrée du réservoir de catalyseur.

6. Procédé de transformation d'une installation de post-condensation de granulés de polyester vierges en une installation de post-condensation de granulés de polyester comprenant du polyester recyclé au moins partiellement regranulé, et de mise en oeuvre du procédé selon la revendication 1 ou 2, dans lequel la post-condensation a lieu en phase solide dans un réacteur, lequel est traversé par un gaz de traitement, le gaz de traitement sortant du réacteur étant au moins partiellement recyclé dans le réacteur et subissant, avant d'être recyclé dans le réacteur, une étape de purification dans un dispositif de combustion catalytique,
**caractérisé en ce que** l'installation entre le réacteur et le dispositif de combustion catalytique est complétée par les étapes de processus suivantes :
- une étape de refroidissement du gaz de traitement
- une étape d'adsorption de composants organiques à point d'ébullition élevé dans un lit de protection.
